(19) Europäisches Patentamt European Patent Office Office européen des brevets

(11) **EP 1 796 046 A1**

(12) **EUROPEAN PATENT APPLICATION**
published in accordance with Art. 158(3) EPC

(43) Date of publication:
**13.06.2007 Bulletin 2007/24**

(51) Int Cl.:
*G06T 15/40* (2006.01)    *A63F 13/00* (2006.01)

(21) Application number: **05782027.6**

(22) Date of filing: **12.09.2005**

(86) International application number:
**PCT/JP2005/016779**

(87) International publication number:
**WO 2006/033261 (30.03.2006 Gazette 2006/13)**

(84) Designated Contracting States:
**DE FR GB**

(30) Priority: **22.09.2004 JP 2004275722**

(71) Applicant: **Konami Digital Entertainment Co., Ltd.
Tokyo 106-6114 (JP)**

(72) Inventor: **YANAGIHARA, Hideki,
Konami Digital Ent. Co., Ltd.
Minato-ku, Tokyo 106-6114 (JP)**

(74) Representative: **Rüger, Barthelt & Abel
Patentanwälte
Postfach 10 04 61
73704 Esslingen (DE)**

(54) **IMAGE PROCESSOR, IMAGE PROCESSING METHOD, INFORMATION RECORDING MEDIUM, AND PROGRAM**

(57)    To perform three-dimensional graphics processes by reducing the number of polygons to be processed, a storage unit (202) of an image processor (201) stores each of a plurality of polygons making up the surfaces of an object placed in a virtual three-dimensional space, in association with any of the surfaces of an approximate polyhedron which approximates the shape of the object, a determination unit (203) determines whether or not each of the surfaces of the stored approximate polyhedron can be seen in a case where the virtual three-dimensional space is observed along a predetermined sight line direction from a predetermined viewpoint, and a generation unit (204) generates an image, as observed along the predetermined direction from the predetermined viewpoint, of polygons, among the plurality of polygons stored in association, that are determined at a determining step as can been seen.

FIG.2

201

STORAGE UNIT — 202

INFORMATION ON SURFACES OF VIRTUAL POLYHEDRON
INFORMATION ON POLYGONS

DETERMINATION UNIT — 203

INFORMATION ON POLYGONS THAT CAN BE "SEEN"

GENERATION UNIT — 204

IMAGE INFORMATION

## Description

Technical Field

The present invention relates to an image processor and an image processing method which are suitable for drawing an object placed in a virtual three-dimensional space and made up of polygons by reducing the number of polygons to be processed, a program for realizing these on a computer, and a computer-readable information recording medium storing the program.

Background Art

Conventionally, three-dimensional graphics techniques have been used in processes in the field of computer graphics and game devices of various types. According to such three-dimensional graphics techniques, the object to be drawn is placed in a virtual three-dimensional space. The surfaces of the object are expressed by a polyhedron. The corner surface of the polyhedron is a polygon (polygon). The literature indicated below discloses such a three-dimensional graphics technique.
Patent Literature 1: Japanese Patent No. 3490983
Generally, in a case where a state of objects placed in the three-dimensional space as seen along a given sight line direction from a viewpoint set in the three-dimensional space is displayed by three-dimensional graphics, the following processes are performed. That is, the angle formed by the outward normal line of each object and a sight line vector representing the direction of the sight line is compared among the respective objects. Then, the polygons, whose angle is 90 degrees to 180 degrees, are sorted in the order of those farther from the viewpoint. Further, the polygons are subjected to projection transformation (where it is general to use perspective transformation in which observation is made from the viewpoint in the sight line direction) on an image buffer in the order of farther ones, and the textures assigned to the polygons are pasted on the regions where they are projection-transformed. Such a process is called Z buffer method.

Disclosure of Invention

Problem to be Solved by the Invention

However, since three-dimensional graphics processes require enormous calculations, the demand for reducing the number of polygons to be processed in an easy manner (in an approximate manner depending on the purpose) to shorten the time necessary for the processes is strong.
The present invention was made to solve such a problem as described above, and an object of the present invention is to provide an image processor and an image processing method which are suitable for drawing an object placed in a virtual three-dimensional space and made up of polygons by reducing the number of polygons to be processed, a program for realizing these on a computer, and a computer-readable information recording medium storing the program.

Means for Solving the Problem

To achieve the above object, the following invention will be disclosed according to the principle of the present invention.
An image processor according to a first aspect of the present invention comprises a storage unit, a determination unit, and a generation unit, which are configured as follows.
First, the storage unit stores each of a plurality of polygons making up surfaces of an object placed in a virtual three-dimensional space, in association with any of surfaces of an approximate polyhedron which approximates a shape of the object.
For example, in a case where an object of a construction such as a building or a tower is disposed in a virtual three-dimensional space, surfaces such as concrete surfaces, window surfaces, reinforcing bar surfaces, etc. on the superficial surface of the construction are expressed while divided into polygons (polygons).
For example, a rectangular parallelepiped or a quadrangular pyramid can be adopted as an approximate polyhedron of such a construction. This is because a rough shape of a building is often a rectangular parallelepiped and a rough shape of a tower is often a quadrangular pyramid.
Then, each polygon (polygon) is stored in association with any of the surfaces of the rectangular parallelepiped or the quadrangular pyramid.
Meanwhile, the determination unit determines whether or not each of the surfaces of the stored approximate polyhedron can be seen, in a case where the virtual three-dimensional space is observed along a predetermined sight line direction from a predetermined viewpoint.
That is, according to the present invention, not the comparison is made by calculating an angle formed between the outward normal vector of each polygon and a sight line direction vector, but the comparison is made by calculating an angle formed between the outward normal vector of each surface of the approximate polyhedron and the sight line direction vector. Since the approximate polyhedron represents a rough shape of the object as described above, when the number of polygons making up the outer shape of the object and the number of surfaces of the approximate polyhedron are compared, the former is generally by far larger than the latter.
Further, the generation unit generates an image, as observed along the predetermined sight line direction from the predetermined viewpoint, of polygons, among the plurality of polygons stored in association, that are associated with surfaces of the approximate polyhedron that are determined at a determining step as can been seen.

That is, only such polygons that are associated with surfaces, among the surfaces of the approximate polyhedron, that can be seen when observed along a current sight line direction from a current viewpoint, are subjected to three-dimensional graphics processes, and various processes for polygons associated with surfaces, among the surfaces of the approximate polyhedron, that cannot be seen are omitted.

According to the present invention, it is possible to draw an object placed in a virtual three-dimensional space and made up of polygons by reducing the number of polygons to be processed, and shorten the calculation time required for drawing.

In image processor of the present invention, each of the plurality of polygons may be stored in association with such a surface of the approximate polyhedron, that has an outward normal line with which an outward normal line of that polygon forms a smallest angle. This invention is for defining the associational relationship between each surface of the approximate polyhedron and each polyhedron on the surface of the object, in the above-described invention.

Most simply, it is possible to associate each polyhedron on the surface of the object with a surface of the approximate polyhedron that is the closest to that polyhedron. Even with such association, it is often possible to obtain an image with a sufficient quality, depending on the shape of the object or the field of application of three-dimensional graphics.

Meanwhile, according to the present invention, association is made, in advance, to such a surface, among the surfaces of the approximate polyhedron, whose outward normal vector forms the smallest angle with the outward normal vector of a polyhedron. This invention adopts approximation of some kind for determining whether a polygon can be seen or not, but performs this determination as accurately as possible by utilizing the associational relationship of this invention.

According to this invention, there is provided a guideline for determining the association between the polygons and the surfaces of the approximate polyhedron, and once such association is made, rapid processes become available because labor required for three-dimensional graphics processes is the same as in the above-described invention.

In the image processor according to the present invention, the approximate polyhedron may be a polygonal column which circumscribes the object and one of its surfaces may contact a ground in the virtual three-dimensional space, the plurality of polygons may be stored in association with surfaces other than the surface contacting the ground, and the determination unit may determine whether or not the surfaces can be seen, except the surface contacting the ground.

As in the above-described example, in a case where a construction placed in a virtual three-dimensional space is to be drawn, it is obvious that there is no chance of the surface contacting the ground being drawn. Hence, according to this invention, such a process is omitted.

According to this invention, no polygon is associated with the surface of the approximate polyhedron that contacts the ground to omit the determination process for the surface contacting the ground and reduce the amount of calculations required for the three-dimensional graphics processes, making it possible to perform rapid processes.

In the image processor according to the present invention, the approximate polyhedron may be a polygonal cone which circumscribes the object and its bottom surface may contact a ground in the virtual three-dimensional space, the plurality of polygons may be stored in association with surfaces other than the bottom surface, and the determination unit may determine whether or not the surfaces can be seen, except the bottom surface.

According to the above-described invention, a polygonal column (typically, a rectangular parallelepiped) is adopted as the approximate polyhedron. According to this invention, a polygonal cone is adopted as the approximate polyhedron and its bottom surface is a surface contacting the ground.

According to this invention, no polygon is associated with the surface of the approximate polyhedron that contacts the ground likewise in the above-described invention, to omit the determination process for the surface contacting the ground and reduce the amount of calculations required for the three-dimensional graphics processes, making it possible to perform rapid processes.

An image processing method according to the second aspect of the present invention is performed by an image processor comprising a storage unit, a determination unit, and a generation unit. The storage unit stores each of a plurality of polygons making up surfaces of an object placed in a virtual three-dimensional space, in association with any of surfaces of an approximate polyhedron which approximates a shape of the object. The method comprises a determining step and a generating step, which are configured as follows.

That is, at the determining step, the determination unit determines whether or not each of the surfaces of the stored approximate polyhedron can be seen in a case where the virtual three-dimensional space is observed along a predetermined sight line direction from a predetermined viewpoint.

Meanwhile, at the generating step, the generation unit generates an image, as observed along the predetermined sight line direction from the predetermined viewpoint, of polygons, among the plurality of polygons stored in association, that are associated with surfaces of the approximate polyhedron that are determined by the determination unit as can be seen.

A program according to another aspect of the present invention is configured to control a computer to function as the above-described image processor, or to control a computer to perform the above-described image processing method.

The program according to the present invention can be stored on a computer-readable information recording medium such as a compact disk, a flexible disk, a hard disk, a magneto optical disk, a digital video disk, a magnetic tape, a semiconductor memory, etc.

The above-described program can be distributed and sold via a computer communication network, independently from a computer on which the program is executed. Further, the above-described information recording medium can be distributed and sold independently from the computer.

Effect of the Invention

According to the present invention, it is possible to provide an image processor and an image processing method which are suitable for drawing an object placed in a virtual three-dimensional space and made up of polygons by reducing the number of polygons to be processed, a program for realizing these on a computer, and a computer-readable information recording medium storing the program.

Brief Description of Drawings

[FIG. 1] It is an explanatory diagram showing a schematic structure of a typical game device on which an image processor according to one embodiment of the present invention is realized.
[FIG. 2] It is an exemplary diagram showing a schematic structure of the image processor according to one embodiment of the present invention;
[FIGS. 3] They are diagrams showing relationships between objects and virtual polyhedrons.
[FIG. 4] It is an explanatory diagram showing a relationship among a viewpoint, a direction of a sight line, a surface of a virtual polyhedron, and a polygon.
[FIG. 5] It is a flowchart showing the flow of control of an image process performed by the image processor according to the present embodiment.

Explanation of Reference Numerals

100 game device

| 101 | CPU |
|-----|-----|
| 102 | ROM |
| 103 | RAM |
| 104 | interface |
| 105 | controller |
| 106 | external memory |
| 107 | image processing unit |
| 108 | DVD-ROM drive |
| 109 | NIC |

| 110 | audio processing unit |
|-----|-----------------------|
| 201 | image processor |
| 202 | storage unit |
| 203 | determination unit |
| 204 | generation unit |
| 301 | object |
| 302 | virtual polyhedron |
| 401 | polygon |
| 402 | viewpoint |
| 403 | sight line |
| 404 | surface of a virtual polyhedron |
| 411 | position vector of the polygon |
| 412 | sight line direction vector |
| 413 | outward normal vector of the polygon |
| 421 | position vector of the surface of the virtual polyhedron |
| 423 | outward normal vector of the surface of the virtual polyhedron |

Best Mode for Carrying Out the Invention

The embodiments of the present invention will be explained below. Embodiments in which the present invention is applied to a game device on which three-dimensional graphics are displayed will be explained below in order to facilitate understanding. However, the present invention can likewise be applied to information processing apparatuses such as computers of various types, PDAs (Personal Data Assistants), portable telephones, etc. That is, the embodiments to be explained below are intended for explanation, not to limit the scope of the present invention. Accordingly, though those having ordinary skill in the art could employ embodiments in which each element or all the elements of the present embodiments are replaced with equivalents of those, such embodiments will also be included in the scope of the present invention.

Embodiment 1

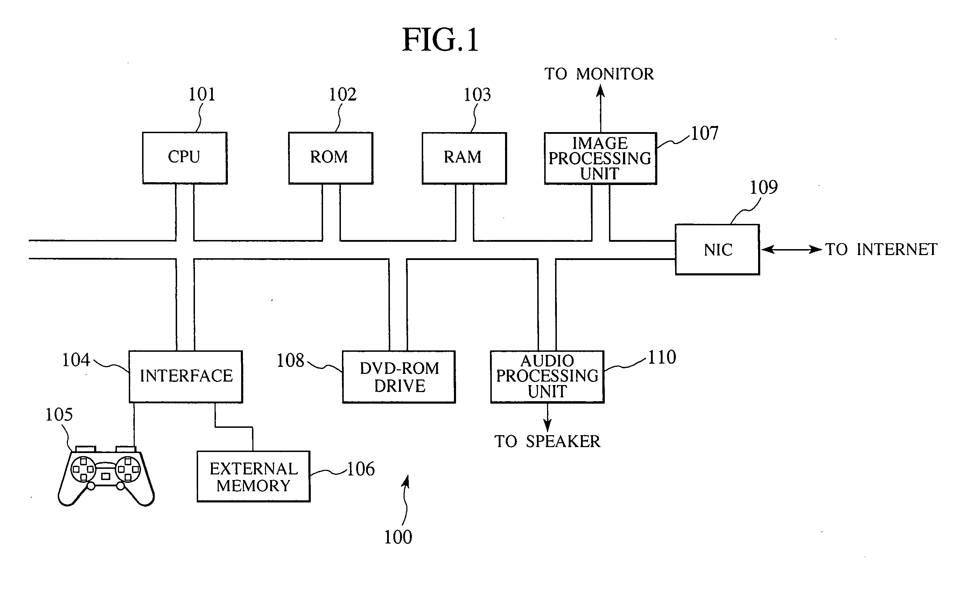

FIG. 1 is an explanatory diagram showing a schematic structure of a typical game device on which an image processor according to the present invention will be realized. The following explanation will be given with reference to this diagram.

A game device 100 comprises a CPU (Central Processing Unit) 101, a ROM 102, a RAM 103, an interface 104, a controller 105, an external memory 106, an image processing unit 107, a DVD-ROM drive 108, an NIC (Network Interface Card) 109, and an audio processing unit 110.

By loading a DVD-ROM storing an image processing program and data onto the DVD-ROM drive 108 and turning on the power of the game device 100, the program will be executed and the image processor according to the present embodiment will be realized.

The CPU 101 controls the operation of the entire game device 100, and is connected to each element to exchange control signals and data. Further, by using an ALU (Arithmetic Logic Unit) (unillustrated), the CPU 101 can perform arithmetic operations such as addition, subtraction, multiplication, division, etc., logical operations such as logical addition, logical multiplication, logical negation, etc., bit operations such as bit addition, bit multiplication, bit inversion, bit shift, bit rotation, etc. upon a storage area, or a register (unillustrated), which can be accessed at a high speed. Further, the CPU 101 itself may be designed to be able to rapidly perform saturate operations such as addition, subtraction, multiplication, division, etc. for dealing with multimedia processes, vector operations such as trigonometric function, etc. or may realize these with a coprocessor.

The ROM 102 stores an IPL (Initial Program Loader) to be executed immediately after the power is turned on, execution of which triggers the program stored on the DVD-ROM to be read into the RAM 103 and executed by the CPU 101. Further, the ROM 102 stores a program and various data for an operating system necessary for controlling the operation of the entire game device 100.

The RAM 103 is for temporarily storing data and programs, and retains the program and data read out from the DVD-ROM, and other data necessary for game proceedings and chat communications. Further, the CPU 101 performs processes such as securing a variable area in the RAM 103 to work the ALU directly upon the value stored in the variable to perform operations, or once storing the value stored in the RAM 103 in the register, performing operations upon the register, and writing back the operation result to the memory, etc.

The controller 105 connected through the interface 104 receives an operation input given by the user when playing a game such as a racing game, etc.

The external memory 106 detachably connected through the interface 104 rewritably stores data indicating the play status (past achievements, etc.) of a racing game, etc., data indicating the progress status of the game, data of chat communication logs (records), etc. The user can store these data on the external memory 106 where needed, by inputting instructions through the controller 105.

The DVD-ROM to be loaded on the DVD-ROM drive 108 stores a program for realizing a game and image data and audio data accompanying the game. Under the control of the CPU 101, the DVD-ROM drive 108 performs a reading process on the DVD-ROM loaded thereon to read out a necessary program and data, which are to be temporarily stored on the RAM 103, etc.

The image processing unit 107 processes the data read out from the DVD-ROM by means of the CPU 101 and an image calculation processor (unillustrated) provided in the image processing unit 107, and thereafter stores the data in a frame memory (unillustrated) provided in the image processing unit 107. The image information stored in the frame memory is converted into a video signal at a predetermined synchronization timing and output to a monitor (unillustrated) connected to the image processing unit 107. Thereby, image displays of various types are available.

The image calculation processor can rapidly perform transparent operations such as overlay operation or $\alpha$ blending of two-dimensional images, and saturate operations of various types.

Further, the image calculation processor can also rapidly perform an operation for rendering, by a Z buffer method, polygon information placed in a virtual three-dimensional space and having various texture information added, to obtain a rendered image of the polygon placed in the virtual three-dimensional space as seen from a predetermined view position along a predetermined direction of sight line.

Further, by the CPU 101 and the image calculation processor working in cooperation, a character string as a two-dimensional image can be depicted on the frame memory, or depicted on the surface of each polygon, according to font information defining the shape of the characters.

Further, it is general that the image calculation processor has a rendering function of projecting a bitmap image (texture image) of a triangle or a quadrangle by appropriately deforming it into an area defining another triangle or quadrangle.

The NIC 109 is for connecting the game device 100 to a computer communication network (unillustrated) such as the Internet, etc., and comprises a 10BASE-T/ 100BASE-T product used for building a LAN (Local Area Network), an analog modem, an ISDN (Integrated Services Digital Network) modem, or an ADSL (Asymmetric Digital Subscriber Line) modem for connecting to the Internet by using a telephone line, a cable modem for connecting to the Internet by using a cable television line, or the like, and an interface (unillustrated) for intermediating between these and the CPU 101.

The audio processing unit 110 converts audio data read out from the DVD-ROM into an analog audio signal, and outputs the signal from a speaker (unillustrated) connected thereto. Further, under the control of the CPU 101, the audio processing unit 110 generates sound effects and music data to be sounded in the course of the game, and outputs the sounds corresponding to the data from the speaker.

In a case where the audio data recorded on the DVD-ROM is MIDI data, the audio processing unit 110 refers to the music source data included in the data, and converts the MIDI data into PCM data. Further, in a case where the audio data is compressed audio data of ADPCM format, Ogg Vorbis format, etc., the audio processing unit 110 expands the data and converts it into PCM data. By D/A (Digital/Analog) converting the PCM data at a timing corresponding to the sampling frequency of the data and outputting the data to the speaker, it is possible to output the PCM data as audios.

Aside from the above, the game device 100 may be configured to perform the same functions as the ROM 102, the RAM 103, the external memory 106, the DVD-ROM to be loaded on the DVD-ROM drive 108, etc. by using a large-capacity external storage device such as a hard disk, etc.

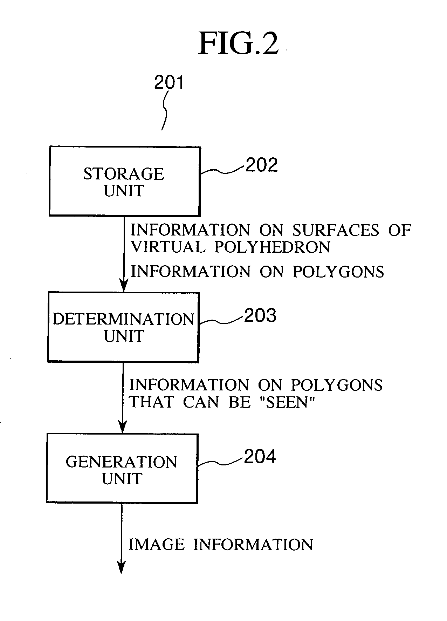

FIG. 2 is an exemplary diagram showing a schematic structure of an image processor according to one embodiment of the present invention. The following explanation will be given with reference to this diagram. The image processor 201 according to the present embodiment comprises a storage unit 202, a determination unit 203, and a generation unit 204.

Here, the storage unit 202 stores each of a plurality of polygons, which constitute the surfaces of an object placed in a virtual three-dimensional space, in association with any of the surfaces of an approximate polyhedron, which approximates the shape of that object.

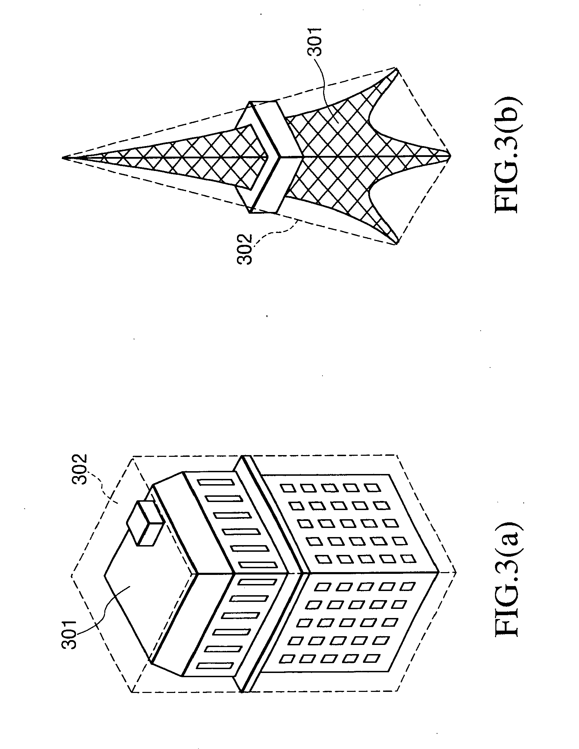

FIGS. 3 are explanatory diagrams showing examples of shapes of objects placed in the virtual three-dimensional space, and examples of approximate polyhedrons corresponding to them. The following explanation will be given with reference to these diagrams. In these diagrams, the contours of the objects are indicated by solid lines and the contours of the approximate polyhedrons are indicated by broken lines respectively.

FIG. 3 (a) shows the relationship between a building object 301 placed in the virtual three-dimensional space and its virtual polyhedron 302.
In many cases, rough shapes of buildings are typically a rectangular parallelepiped, though may sometimes take a shape like a polygonal column. The shape of the object 301 of the present example is generally a rectangular parallelepiped. The polygons making up the object 301 are pasted with textures of concrete surfaces, windows, etc. to express a building in the virtual three-dimensional space.

Hence, a rectangular parallelepiped (quadrangular prism), which has the major constructional elements (walls and ceiling) of the building object 301 as its surfaces, is adopted as the virtual polyhedron 302.

FIG. 3 (b) shows the relationship between a tower object 301 placed in the virtual three-dimensional space and its virtual polyhedron 302.
In many cases, rough shapes of towers are typically a polygonal column, a polygonal cone, and a polygonal frustum (the remainder of a polygonal cone from which its top portion is cut off), and the shape of the object 301 of the present example is generally a quadrangular pyramid. The polygons making up the object 301 are pasted with a mesh-like texture representing reinforcing bars, and further with textures of concrete surfaces, windows, etc. likewise the above-described object 301, to express a tower in the virtual three-dimensional space.

Hence, a quadrangular pyramid, which has the major constructional elements (walls) of the tower object 301 as its surfaces and has the top of the object as its vertex, is adopted as the virtual polyhedron 302.

It is typically preferred that a polyhedron which circumscribes the object 301 (or includes the polygons of the object 301 or overlaps with the polygons of the object 301), or represents the general shape of the object 301 (accordingly, may have a surface that intersects the polygons of the object 301), particularly, a polygonal column or a polygonal cone be adopted as the virtual polyhedron 302. This is because the number of surfaces of such polyhedrons is by far smaller than the number of polygons making up the object 301. It is the intention to reduce the amount of calculations, by trimming off polygon processes by the surfaces of the virtual polyhedron 302, as will be described later.

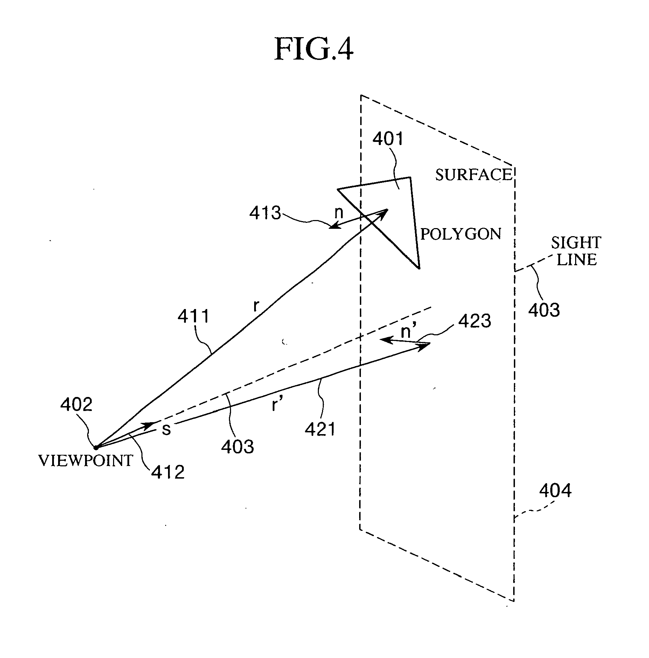

The storage unit 202 stores each of the polygons of the object in association with any of the surfaces of such a virtual polyhedron. How to define such association will be explained below. FIG. 4 is an explanatory diagram showing a positional relationship among a viewpoint, a sight line direction, one surface of a polyhedron, and one polygon. The following explanation will be given with reference to this diagram.

In three-dimensional graphics, a state of a polygon 401 placed in a virtual three-dimensional space as seen along the direction of a sight line 403 from a viewpoint 402 set in the space is drawn. A position vector r 411 of the polygon 401, whose origin is at the viewpoint 402, a direction vector s 412 of the sight line 403 starting from the viewpoint 402, and an outward normal vector n 413 of the polygon 401 will be considered.

The destination pointed to by the position vector r 411 of the polygon 401 is any of the representative points inside the polygon 401, typically any of the vertexes of the polygon 401 or the median point of the polygon 401.

Strictly, the determination whether the texture of the polygon 401 should be drawn or not is determined based on the range of the angle formed between the position vector r 411 and the outward normal vector n 413. However, in the case of an object which is apart by a predetermined distance or larger, an approximate calculation may be done by using the sight line direction vector s 412 instead of the position vector r 411. That is, when strictly

$$-1 \leq (r \cdot n)/(|r||n|) \leq 0$$

or approximately

$$-1 \leq (s \cdot n)/(|s||n|) \leq 0$$

is established (when the angle formed between both the vectors is equal to or larger than 90 degrees and equal to or smaller than 180 degrees), the surface of the polygon 401 can be seen from the viewpoint 402. Needless to say, with further use of arccos(·), the angle itself may be obtained to do the determination.

Accordingly, it is essentially necessary to do the calculations of the inner product described above (the calculation for obtaining the angle formed between the vectors) for each polygon 401.

According to the present embodiment, the determination is done with the use of a surface 404 of the virtual polyhedron 302, that is associated with the polygon 401. A plurality of polygons 401 are associated with the surface 404, and by determining whether or not the surface 404 can be seen, the determination whether or not the plurality of polygons associated with the surface 404 can be seen is done collectively (approximately).

As shown in the present diagram, a position vector r' 421 of the surface 404, whose origin is at the viewpoint 402, and an outward normal vector n' 423 of the surface 404 will be considered. The destination pointed to by the position vector r' 421 is a representative point inside the surface 404, typically the median point or any vertex of the surface 404.

Likewise in the case of polygon 401, it is possible to determine whether or not the surface 404 of the virtual polyhedron 302 can be seen, by

$$-1 \leq (r' \cdot n')/(|r'||n'|) \leq 0$$

or

$$-1 \leq (s \cdot n')/(|s||n'|) \leq 0$$

Hence, in order to approximate the determination whether or not the polygon 401 can be seen by the determination whether or not the surface 404 can be seen, it is required that the angle formed between the outward normal vector n 413 of the polygon 401 and the outward normal vector n' 423 of the surface 404 be narrow. For each of the plurality of polygons 401, the value

$$(n \cdot n')/(|n||n'|)$$

is calculated regarding that polygon 401 and each surface 404 of the virtual polyhedron 302, so that the polygon 401 may be associated with such a surface 404 with which this value is the largest (the closer to 1 this value is, the smaller the angle formed between them is).

In this manner, the storage unit 202 stores the association between a polygon 401 and a surface 404.

Note that in the case of a construction such as a building, a tower, etc., its bottom surface (the surface at which the construction contacts the ground) can never be seen. Hence, according to the present embodiment, the surface that contacts the ground will not be adopted as a surface of the virtual polyhedron 302. Each polygon 401 is to be associated with any of the surfaces 404 that are disposed at the side surfaces or the top surfaces of the virtual polyhedron 302.

Further, though determining whether or not the polygon 401 can be seen according to whether or not the surface 404 of the virtual polyhedron 302 can be seen is an approximate method, this can often obtain a sufficient visual effect, depending on the field to which the present embodiment is applied. Though having said this, it is also possible to make this approximation as accurate as possible, within the range in which the amount of calculations does not increase (processes for the polygons 401 that cannot be seen are reduced by as many as possible).

That is, in the foregoing explanation, a polygon is determined as can be seen in a case where the angle formed between the two vectors is equal to or larger than 90 degrees and equal to or smaller than 180 degrees. This lower limit is to be lowered by a bit. For example, with an angle of margin set to 10 degrees, a rule is laid that a polygon is determined as can been seen in a case where the angle formed between the two vectors is equal to or larger than 80 degrees and equal to or smaller than 180 degrees. Specifically, when this angle of margin is referred to as $\theta$ ($0° \leq \theta \leq 90°$, i.e., $0 \leq \theta \leq \pi/2$), the determination can be done according to

$$-1 \leq (r' \cdot n')/(|r'||n'|) \leq \cos\theta$$

or

$$-1 \leq (s \cdot n')/(|s||n'|) \leq \cos\theta.$$

The determination may be done according to

$$\pi \geq \arccos((r' \cdot n')/(|r'||n'|)) \geq \pi/2 - \theta$$

or

$$\pi \geq \arccos((s \cdot n')/(|s||n'|)) \geq \pi/2 - \theta$$

if expressed in terms of the angle formed between the vectors. It is possible to arbitrarily select which determination is to use, depending on what kind of hardware or basic library is provided in the computer.

Note that it is general to determine the length of a normal vector or a sight line direction vector as 1. That is,

$$|n|=|n'|=|s|=1$$

In this case, it is possible to simplify each of the above-indicated determination criteria as follows.

$$-1\leq(r'\cdot n')/|r'|\leq\cos\theta;$$

$$-1\leq(s\cdot n')\leq\cos\theta;$$

$$\pi\geq\arccos((r'\cdot n')/|r'|)\geq\pi/2-\theta;$$

$$\pi\geq\arccos(s\cdot n')\geq\pi/2-\theta$$

As obvious from the glance at these, it can be considered that the calculation time is shorter with the use of the sight line direction vector s 412 rather than with the use of the position vector r' 421.

Further, when θ is set to 0°(=0), there is no margin, while θ is set to 90°(=π/2), the process is carried out with all the polygons 401 determined as can be seen. Accordingly, the value of θ may be arbitrarily be set according to the field of application and the capacity of the computer resources.

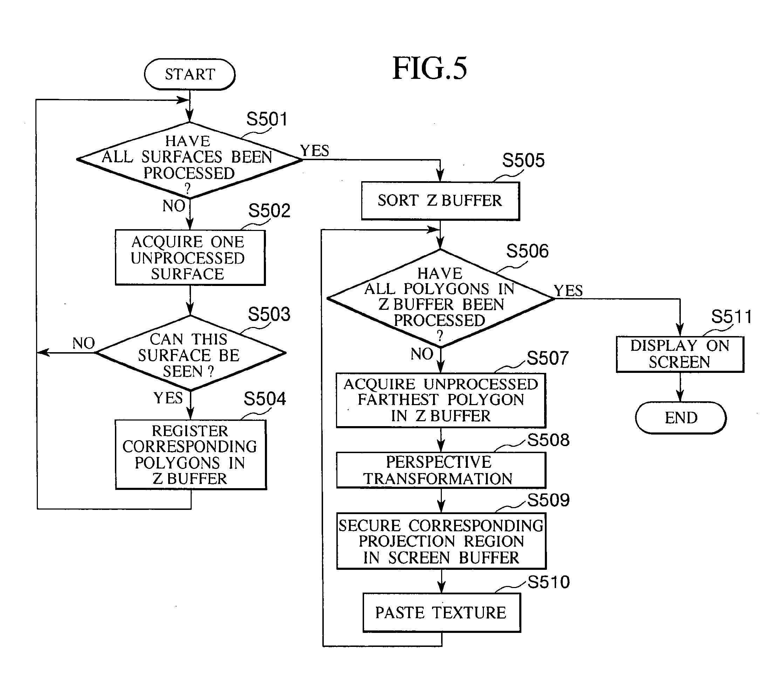

FIG. 5 is a flowchart showing the flow of control of an image process performed by the image processor. The following explanation will be given with reference to this diagram.

It is assumed that the storage unit 202 already stores each of the polygons 401 of an object 301 in association with any of the surfaces 404 of a virtual polyhedron 302, as described above.

Hence, first, the determination unit 203 performs processes repeatedly for each of the surfaces 404 of the virtual polyhedron 302. First, the determination unit 203 determines whether all the surfaces 404 have been processed (step S501), acquires one unprocessed surface 404 (step S502) if there is any unprocessed surface 404 (step S501; No), and determines whether or not the outer surface of that surface 404 can be seen in a case where the surface 404 is observed along the direction of the sight line vector s 412 from the viewpoint 402 set in the virtual three-dimensional space (step S503). At this time, as described above, the outward normal vector n' 423 assigned to the surface 404, or where necessary, the position vector r' 421 of the surface 404 that is from the viewpoint 402, will be used.

In a case where the outer surface of the surface 404 can be seen (step S503; Yes), all the polygons 401 stored in the storage unit 202 in association with this surface 404 are registered in a Z buffer (step S504), and the flow returns to step S501. Here, the Z buffer is an array-like storage area which is prepared in the RAM 103 or the like, and is used for determining the relationship among polygons whether they are farther or closer from the viewpoint.

On the other hand, in a case where the outer surface of the surface 404 cannot be seen (step S503; No), the flow returns to step S501.

As known from the above, in a case where the image processor 201 is realized on the game device 100, the CPU 101 functions as the determination unit 203 in cooperation with the RAM 103. Other than this, in a case where multimedia instructions, vector operation instructions, parallel arithmetic instructions, etc. of the image processing processor can be used, the function of the determination unit 203 may be fulfilled by parallel processing of the above-described repetition or with the use of vector operation instructions, etc.

Then, when processes of all the surfaces 404 have been completed (step S501; Yes), the generation unit 204 sorts the polygons 401 registered in the Z buffer in the order of those farther from the viewpoint (step S505). Then, the generation unit 204 repeats the following processes for the farthest polygon 401 to the closest polygon 401.

That is, the generation unit 204 determines whether all the polygons 401 registered in the sorted Z buffer have been processed (step S506), acquires the polygon 401 farthest from the viewpoint 401 among unprocessed polygons 401 (step S507) if there is any unprocessed polygon 401 (step S506; No), applies a predetermined perspective transformation based on the position information and posture information of that polygon 401 in the virtual three-dimensional space, the position of the viewpoint, and the sight line direction (step S508), secures a region on which the polygon 401 is to be projected in a screen buffer (step S509), pastes the texture assigned to the polygon 401 in that region (step S510), and returns to step S506.

In this manner, the CPU 101 functions as the generation unit 204 in cooperation with the RAM 103 and the image processing processor of the image processing unit 107.

Through the repetitive process of step S501 to step S504, only such polygons 401, whose texture surface (is determined as) can be seen, are registered in the Z buffer.

Therefore, it is naturally possible to do with a smaller amount of calculations than required in a case where all the polygons 401 are registered in the Z buffer. Further, it is apparent that the amount of calculations can be reduced with the use of the approximate method of the present embodiment, compared with performing preliminary processes of whether can be seen or cannot be seen for all the polygons 401.

Hypothetically, even if a polygon 401 which cannot actually be seen is registered in the Z buffer, when the object 301 is a closed polyhedron, the polygon 401 which cannot actually be seen is, (almost certainly), to be overwritten with a polygon 401 that exists at a closer position to the viewpoint 402 than it does. Therefore, it can be considered that a sufficient performance is exerted in such an application as a racing game where background images (to which the player does not necessarily pay attention) are generated in real time.

Then, after the drawing on the screen buffer is done through the above-described repetitive steps S506 to step S510 (step S506; Yes), the content in the screen buffer is transferred to a display device at a vertical synchronization signal cycle so that the generated image may be displayed (step S511), and the present process is terminated.

As described above, according to the present embodiment, it is possible to generate three-dimensional graphics as rapidly as possible, by reducing the number of polygons to be the object of calculations.

The present application claims priority based on Japanese Patent Application No 2004-275722, the content of which is incorporated herein in its entirety.

Industrial Applicability

As explained above, it is possible to provide an image processor and an image processing method which are suitable for drawing an object placed in a virtual three-dimensional space and made up of polygons by reducing the number of polygons to be processed, a program for realizing these on a computer, and a computer-readable information recording medium storing the program, and to apply these to realizing a racing game or an action game where rapid three-dimensional graphics processes are required, and to virtual reality techniques, etc. for providing virtual experiences of various types.

**Claims**

1. An image processor, comprising:

a storage unit which stores each of a plurality of polygons making up surfaces of an object placed in a virtual three-dimensional space, in association with any of surfaces of an approximate polyhedron which approximates a shape of the object;
a determination unit which determines whether or not each of the surfaces of the stored approximate polyhedron can be seen, in a case where the virtual three-dimensional space is observed along a predetermined sight line direction from a predetermined viewpoint; and
a generation unit which generates an image, as observed along the predetermined sight line direction from the predetermined viewpoint, of polygons, among the plurality of polygons stored in association, that are associated with surfaces of the approximate polyhedron that are determined by said determination unit as can been seen.

2. The image processor according to claim 1, wherein each of the plurality of polygons is stored in association with such a surface of the approximate polyhedron, that has an outward normal line with which an outward normal line of that polygon forms a smallest angle.

3. The image processor according to claim 1, wherein: said determination unit determines that a surface of the approximate polyhedron can be seen, in a case where an angle formed between a vector representing the sight line direction and an outward normal vector of that surface of the approximate polyhedron is between a predetermined lower limit angle and a predetermined upper limit angle; and the predetermined lower limit angle is an angle equal to or smaller than 90 degrees and the predetermined upper limit angle is 180 degrees.

4. The image processor according to claim 1, wherein: said determination unit determines that a surface of the approximate polyhedron can be seen, in a case where an angle formed between a position vector of a representative point included in the approximate polyhedron, whose origin is at the viewpoint, and an outward normal vector of that surface of the approximate polyhedron is between a predetermined lower limit angle and a predetermined upper limit angle; and the predetermined lower limit angle is an angle equal to or smaller than 90 degrees and the predetermined upper limit angle is 180 degrees.

5. The image processor according to claim 1, wherein: the approximate polyhedron is a polygonal column which circumscribes the object and one of its surfaces contacts a ground in the virtual three-dimensional space; the plurality of polygons are stored in association with surfaces other than the surface contacting the ground; and said determination unit determines whether or not the surfaces can be seen, except the surface contacting the ground.

6. The image processor according to claim 1, wherein: the approximate polyhedron is a polygonal cone which circumscribes the object, and its bottom surface contacts a ground in the virtual three-dimensional space; the plurality of polygons are stored in association with surfaces other than the bottom surface; and said determination unit determines whether or not the surfaces can be seen, except the bottom surface.

**7.** An image processing method performed by an image processor comprising a storage unit, a determination unit, and a generation unit, said storage unit storing each of a plurality of polygons making up surfaces of an object placed in a virtual three-dimensional space, in association with any of surfaces of an approximate polyhedron which approximates a shape of the object, said method comprising:

a determining step at which said determination unit determines whether or not each of the surfaces of the stored approximate polyhedron can be seen in a case where the virtual three-dimensional space is observed along a predetermined sight line direction from a predetermined viewpoint; and

a generating step at which said generation unit generates an image, as observed along the predetermined sight line direction from the predetermined viewpoint, of polygons, among the plurality of polygons stored in association, that are associated with surfaces of the approximate polyhedron that are determined at said determining step as can be seen.

**8.** A computer-readable information recording medium storing a program for controlling a computer to function as:

a storage unit which stores each of a plurality of polygons making up surfaces of an object placed in a virtual three-dimensional space, in association with any of surfaces of an approximate polyhedron which approximates a shape of the object;

a determination unit which determines whether or not each of the surfaces of the stored approximate polyhedron can be seen, in a case where the virtual three-dimensional space is observed along a predetermined sight line direction from a predetermined viewpoint; and

a generation unit which generates an image, as observed along the predetermined sight line direction from the predetermined viewpoint, of polygons, among the plurality of polygons stored in association, that are associated with surfaces of the approximate polyhedron that are determined by said determination unit as can been seen.

**9.** A program for controlling a computer to function as:

a storage unit which stores each of a plurality of polygons making up surfaces of an object placed in a virtual three-dimensional space, in association with any of surfaces of an approximate polyhedron which approximates a shape of the object;

a determination unit which determines whether or not each of the surfaces of the stored approximate polyhedron can be seen, in a case where the virtual three-dimensional space is observed along a predetermined sight line direction from a predetermined viewpoint; and

a generation unit which generates an image, as observed along the predetermined sight line direction from the predetermined viewpoint, of polygons, among the plurality of polygons stored in association, that are associated with surfaces of the approximate polyhedron that are determined by said determination unit as can been seen.

# FIG.1

# FIG.2

201

```
┌─────────────┐
│   STORAGE   │──── 202
│    UNIT     │
└─────────────┘
       │  INFORMATION ON SURFACES OF
       │  VIRTUAL POLYHEDRON
       │  INFORMATION ON POLYGONS
       ↓
┌─────────────┐
│DETERMINATION│──── 203
│    UNIT     │
└─────────────┘
       │  INFORMATION ON POLYGONS
       │  THAT CAN BE "SEEN"
       ↓
┌─────────────┐
│ GENERATION  │──── 204
│    UNIT     │
└─────────────┘
       │
       │  IMAGE INFORMATION
       ↓
```

FIG.3(a)

FIG.3(b)

# FIG.4

# FIG.5

START

S501
HAVE ALL SURFACES BEEN PROCESSED ? — YES → SORT Z BUFFER — S505

NO

S502
ACQUIRE ONE UNPROCESSED SURFACE

S503
CAN THIS SURFACE BE SEEN ? — NO

YES

S504
REGISTER CORRESPONDING POLYGONS IN Z BUFFER

S506
HAVE ALL POLYGONS IN Z BUFFER BEEN PROCESSED ? — YES → DISPLAY ON SCREEN — S511 → END

NO

S507
ACQUIRE UNPROCESSED FARTHEST POLYGON IN Z BUFFER

S508
PERSPECTIVE TRANSFORMATION

S509
SECURE CORRESPONDING PROJECTION REGION IN SCREEN BUFFER

S510
PASTE TEXTURE

## INTERNATIONAL SEARCH REPORT

| International application No. |
|---|
| PCT/JP2005/016779 |

**A. CLASSIFICATION OF SUBJECT MATTER**
*G06T15/40* (2006.01), *A63F13/00* (2006.01)

According to International Patent Classification (IPC) or to both national classification and IPC

**B. FIELDS SEARCHED**

Minimum documentation searched (classification system followed by classification symbols)
*G06T15/40* (2006.01), *G06T15/00* (2006.01)

Documentation searched other than minimum documentation to the extent that such documents are included in the fields searched
Jitsuyo Shinan Koho          1922-1996   Jitsuyo Shinan Toroku Koho    1996-2005
Kokai Jitsuyo Shinan Koho    1971-2005   Toroku Jitsuyo Shinan Koho    1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 6-348860 A  (Namco Ltd.),<br>22 December, 1994 (22.12.94),<br>Par. Nos. [0032] to [0039]; Fig. 4<br>(Family: none) | 1-9 |
| A | JP 5-174156 A  (Fujitsu Ltd.),<br>13 July, 1993 (13.07.93),<br>Full text; Figs. 1 to 4<br>(Family: none) | 1-9 |
| A | JP 11-259681 A  (Japan Nuclear Cycle Development Institute),<br>24 September, 1999 (24.09.99),<br>Full text; Figs. 1 to 17<br>(Family: none) | 1-9 |

| ☒ Further documents are listed in the continuation of Box C. | ☐ See patent family annex. |
|---|---|

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>25 October, 2005 (25.10.05) | Date of mailing of the international search report<br>08 November, 2005 (08.11.05) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2005/016779

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2003-109033 A  (Fujitsu Ltd.),<br>11 April, 2003 (11.04.03),<br>Full text; Figs. 1 to 12<br>(Family: none) | 1-9 |

Form PCT/ISA/210 (continuation of second sheet) (April 2005)

## REFERENCES CITED IN THE DESCRIPTION

**Patent documents cited in the description**

- JP 3490983 B
- JP 2004275722 A